# NEUE EUROPÄISCHE PATENTSCHRIFT

(11) **EP 0 792 415 B2**
(45) Veröffentlichungstag und Bekanntmachung des Hinweises auf die Entscheidung über den Einspruch: **29.08.2007**
(45) Hinweis auf die Patenterteilung: 28.11.2001
(21) Anmeldenummer: 95933222.2
(22) Anmeldetag: 05.10.1995
(51) Int. Cl.: F03D 11/02, F16H 1/28

(54) **PLANETENGETRIEBE FÜR WINDTURBINE**
PLANETARY GEAR FOR WIND TURBINES
ENGRENAGE PLANETAIRE POUR TURBINE EOLIENNE

(30) Priorität: 07.10.1994 AT 189994; 23.11.1994 AT 216694
(43) Veröffentlichungstag der Anmeldung: 03.09.1997
(73) Patentinhaber: Windtec Consulting GmbH, 9020 Klagenfurt (AT)
(72) Erfinder: Hehenberger, Gerald, 9020 Klagenfurt (AT)
(74) Vertreter: Hehenberger, Reinhard
(86) Internationale Anmeldenummer: PCT/AT1995/000193
(87) Internationale Veröffentlichungsnummer: WO 1996/011338

(56) Entgegenhaltungen:
- EP-A- 0 093 461
- EP-A- 0 388 207
- EP-A- 0 635 639
- WO-A-91/19916
- DE-A- 3 625 840
- DE-B- 1 077 160
- US-A- 3 792 629
- US-A- 4 158 971
- THÖRNBLAD P.: 'Gears for Wind Power Plants' SECOND INTERNATIONAL SYMPOSIUM ON WIND ENERGY SYSTEMS Bd. 1, 03 Oktober 1978 - 06 Oktober 1978, AMSTERDAM, Seiten C6-89 - C6-106, XP002133564
- "Umweltbewusste Antriebstechnik", VDI-Berichte, Tagung Fürth, 15. und 16. September 1992, Seiten 440-458

## Beschreibung

Die Erfindung betrifft ein Planetengetriebe für eine Windkraftanlage, mit einem in einem Getriebegehäuse gelagerten Planetenträger, der mit einer querkraftbelasteten Antriebswelle verbunden ist.

Derartige Windkraftanlagen sind meist folgendermaßen aufgebaut. Eine Rotorwelle wird mittels zweier Lager in einem Lagerbock geführt. An dem einen Ende dieser Rotorwelle wird die Rotornabe mit einer Schraubenverbindung befestigt. Das andere Ende der Rotorwelle weist beispielsweise eine Schrumpfverbindung oder eine Keilwellenverbindung zur Drehmomentübertragung zwischen Rotorwelle und Getriebe auf.

Eine andere bekannte Ausführungsform besteht aus einer sich nicht drehenden Träger-Hohlwelle auf der die Nabe drehbar gelagert wird. Das Antriebs-Drehmoment wird durch eine in diesem Fall nicht durch Querkräfte belastete Welle, die koaxial in der Träger-Hohlwelle läuft, von der Nabe auf das Getriebe übertragen. Die Wellen/Getriebe-Verbindung ist beispielsweise als Schrumpfverbindung, die Naben/Wellen-Verbindung beispielsweise als Bolzenkupplung ausgeführt.

Die Anteile der Rotorwelle inkl. deren Lagerung und Lagerbock bzw. der Träger-Hohlwelle bezüglich Kosten und Gewicht sind beträchtlich. Für beide oben beschriebenen Varianten ist der Kostenanteil an den Gesamtkosten der Windkraftanlage jeweils ca. 7%, der Gewichtsanteil am Gesamtgewicht der Windkraftanlage ohne Turm jeweils ca. 15%. Der hohe Gewichtsanteil beeinflußt in weiterer Folge auch die Dimensionierung der im Kraftfluß nachgelagerten Teile bis hin zum Turm und Fundament negativ.

Aus der EP-A-635 639 ist ein gattungsgemäßes Planetengetriebe bekannt, bei dem eine querkraftbelastete Antriebswelle über eine Zahnwellen-Naben-Verbindung mit einem in einem Getriebegehäuse gelagerten Planetenträger verbunden ist.

In der WO 91/19916 ist ein Planetengetriebe offenbart, bei dem eine querkraftbelastete Antriebswelle direkt in einem Getriebegehäuse gelagert ist. Auf der Antriebswelle ist ein Planetenträger befestigt, der selbst nicht im Getriebegehäuse gelagert ist.

Die Aufgabe dieser Erfindung ist es, sowohl die Kosten als auch das Gewicht der Rotornaben/Getriebe-Verbindung zu verringern.

Gelöst wird diese Aufgabe mit einem Planetengetriebe nach Anspruch 1. Die sich dadurch gegenüber dem Stand der Technik ergebenden Vorteile zeigt überschlägig die folgende Tabelle:

| | Anteil der Kosten an Gesamtkosten der Anlage [%] | Gewichtsanteil am Gesamtgewicht der Anlage (ohne Turm) [%] |
|---|---|---|
| Stand der Technik*) | 17 | 30 |
| Erfindung | 11 | 15 |
| Differenz | 6 | 15 |

| | | |
|---|---|---|
| *) Rotorwelle, Lager, Lagerbock, Verbindung Rotornabe/Rotorwelle und Rotorwelle/Getriebe sowie Getriebe (Fig. 1); oder Rotorwelle, Lager, Träger-Hohlwelle, Verbindung Rotornabe/Rotorwelle bzw. Rotorwelle/Getriebe und Getriebe (Fig. 2). | | |

Dadurch, daß für die Antriebswelle keine gesonderte Lagerung erforderlich sondern diese über den Planetenträger im Getriebe gelagert ist, kann sich durch die vorliegende Erfindung gegenüber dem Stand der Technik eine Kostenreduktion für die Gesamtanlage von etwa 6% und eine Gewichtsreduktion für die Anlage ohne Turm von etwa 15% ergeben.

Weitere Merkmale und Vorteile der Erfindung ergeben sich aus den Unteransprüchen und der nachfolgenden Beschreibung von Ausführungsbeispielen der Erfindung unter Bezugnahme auf die Zeichnungen.

Es zeigen die
- Fig. 1 und 2: Ausführungsformen von Windkraftanlagen gemäß dem Stand der Technik, und die
- Fig. 3 bis 6: Ausführungsformen von Planetengetrieben gemäß vorliegender Erfindung, die bevorzugt bei Windkraftanlagen zum Einsatz kommen.

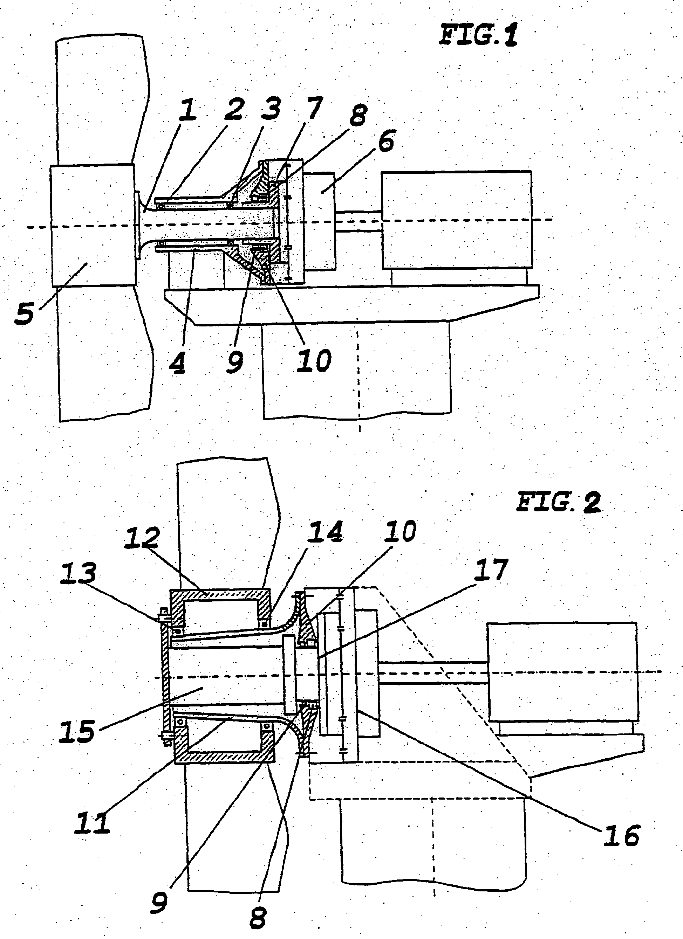

Fig. 1 zeigt die bei Windkraftanlagen am häufigsten verwendete Ausführungsvariante. Eine Rotorwelle 1 ist mittels zweier Lager 2,3 in einem Lagerbock 4 gelagert. An dem einen Ende dieser Rotorwelle 1 ist die Rotornabe 5 mittels einer Schraubverbindung befestigt. Das andere Ende der Rotorwelle 1 weist zur Drehmomentübertragung zwischen Rotorwelle 1 und Getriebe 6 eine Keilwellenverbindung auf. Das Getriebe 6 ist ein klassisches 2-stufiges Planetengetriebe mit einer zweifach gelagerten Antriebswelle 7, wobei das rotorseitige Getriebelager 8 und die Wellendichtung 9 in den vorderen Getriebedeckel 10 integriert sind.

Fig. 2 zeigt eine andere bekannte Ausführungsform. Diese besteht aus einer sich nicht drehenden Träger-Hohlwelle 11, auf der die Rotornabe 12 mittels zweier Lager 13, 14 drehbar gelagert ist. Das Antriebs-Drehmoment wird mittels einer in diesem Fall nicht durch Querkräfte belasteten Welle 15, die koaxial in der Trägerhohlwelle 11 gelagert ist, von der Rotornabe 12 auf das Getriebe 16 übertragen. Die Wellen/Getriebe-Verbindung ist hier als Schrumpfverbindung, die Naben/Wellen-Verbindung als Bolzenkupplung ausgeführt. Das Getriebe 16 ist wie in Fig. 1 ebenfalls ein klassisches, 2-stufiges Planetengetriebe mit einer doppelt gelagerten Antriebswelle 17, wobei das rotorseitige Getriebelager 8 und die Wellendichtung 9 in den vorderen Getriebedeckel 10 integriert sind.

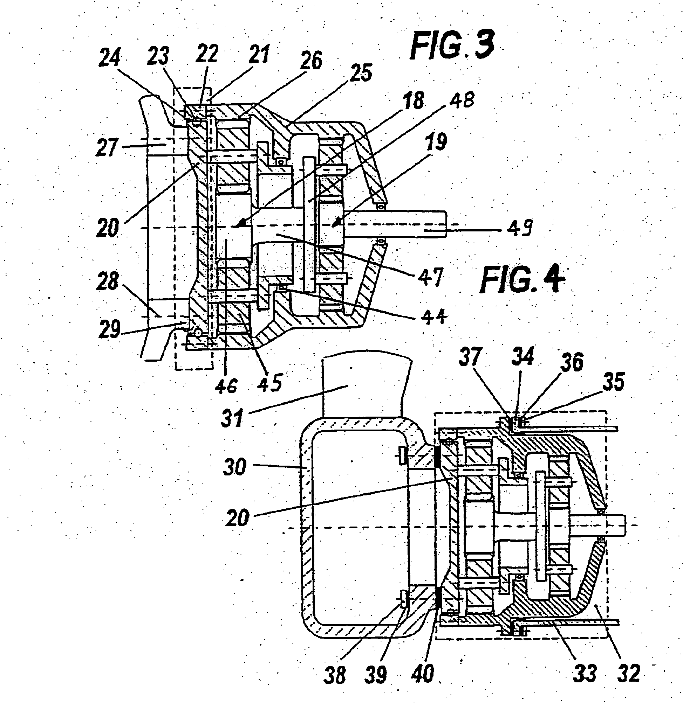

Fig. 3 zeigt eine erste Ausführungsform der Erfindung. Das Planetengetriebe ist mit zwei Planetenradstufen 18, 19 ausgeführt. Die Antriebswelle ist in den Planetenträger 20 der ersten Getriebestufe 18 integriert und so ausgeführt, daß sie gleichzeitig als Innenring des Rotorlagers 21 dient. Die Antriebswelle bzw. der Planetenträger 20 ist auf seiner dem Rotor 27 gegenüberliegenden Seite über ein zweites Lager 44 im Gehäuse 25 des Getriebes gelagert.

Das Rotorlager 21 besteht weiters aus einem Außenring 22, einer vom Lagerdurchmesser und von der Belastung abhängigen Anzahl von Wälzkörpern 23 und einer geeigneten Dichtung 24. Der Außenring 22 des Rotorlagers 21 ist mit dem Gehäuse 25 des Getriebes verschraubt, das das Hohlrad 26 der Planetenstufe 18 trägt. Der Außenring 22, die Dichtung 24, die Wälzkörper 23 und das Antriebselement 20 bilden somit den antriebsseitigen Gehäusedeckel des Getriebes.

Zur Befestigung des Rotors 27 einer Antriebswelle, nämlich eines Windrades, an der Antriebswelle bzw. am Planetenträger 20 hat dieser eine entsprechend dem Durchmesser des Rotorlagers 21 und der Belastung des Getriebes dimensionierte Verschraubung 28 (durch eine strichpunktierte Linie angedeutet) und eine Zentrierung 29.

Am Planetenträger 20 sind wie an sich bekannt drei Planetenräder 45 gelagert, die mit einem Sonnenrad 46 im Eingriff stehen. Das Sonnenrad 46 wiederum ist über eine Welle 47 mit einem Planetenträger 48 der zweiten Getriebestufe 19 verbunden, deren Abtriebswelle 49 mit einem Generator verbunden ist.

Fig. 4 zeigt eine weitere Ausführungsform eines erfindungsgemäßen Getriebes 32, für eine Windkraftanlage. Eine Rotornabe 30, die ein oder mehrere Rotorblätter 31 trägt, ist mit der Antriebswelle des Getriebes 32 verschraubt, die gleichzeitig den Planetenträger 20 der ersten Planetengetriebestufe bildet. Durch diese Anordnung wird das Antriebsdrehmoment des Rotors 30 direkt von der Rotornabe 30 in den Plantenträger 20 des Getriebes 32 eingeleitet. Das Getriebe 32 wird vorzugsweise mit dem Maschinenrahmen 33 verschraubt. Zur Schwingungs- und Lärmentkoppelung von Getriebe 32 und Maschinenrahmen 33 wird ein Anschlußflansch 34 des Maschinenrahmens 33 über Dämmaterialeinsätze 36, 37 zwischen das Gehäuse des Getriebes 32 und einen Ring 35 geschraubt. Zum gleichen Zweck wird der Anschlußflansch der Rotornabe 30 und über Dämmaterialeinsätze 39, 40 an den Planetenträger geschraubt (38).

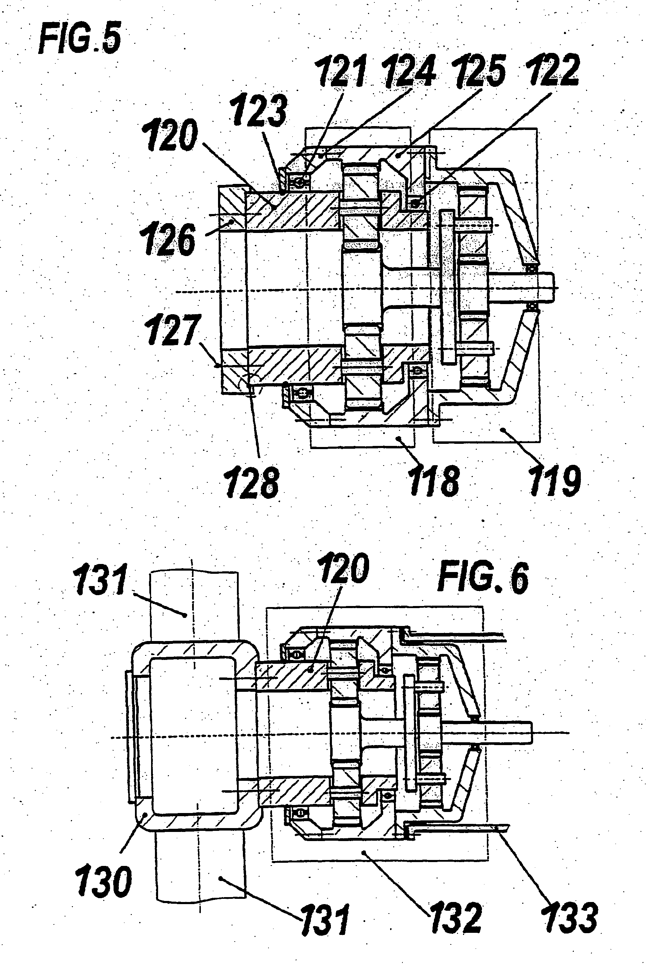

Fig. 5 zeigt eine weitere Ausführungsform der vorliegenden Erfindung. Das Getriebe ist wieder mit zwei Planetenradstufen 118, 119 ausgeführt. Die Antriebswelle ist so ausgebildet, daß sie als Planetenträger 120 der Planetenradstufe 118 dient. Der Planetenträger 120 ist mittels zweier Lager 121, 122 im Getriebegehäuse 124, 125 gelagert. Eine geeignete Dichtung 123 schließt das Getriebe antriebsseitig ab. Der Rotor 126 einer Antriebsquelle ist an der Antriebswelle bzw. am Planetenträger 120 über eine entsprechend dem Durchmesser des Rotorlagers 121 und der Belastung des Getriebes dimensionierte Verschraubung 127 (durch eine strichpunktierte Linie angedeutet) und eine Zentrierung 128 befestigt.

Fig. 6 zeigt eine weitere Ausführungsform eines erfindungsgemäßen Getriebes für eine Windkraftanlage. Die Rotornabe 130, die ein oder mehrere Rotorblätter 131 trägt, ist mit dem Planetenträger 120 des Getriebes 132 verschraubt, der gleichzeitig die Antriebswelle bildet. Durch diese Anordnung wird das Antriebsdrehmoment des Rotors 130 der Antriebsquelle direkt von der Rotornabe 130 in den Planetenträger 120 des Getriebes 132 eingeleitet. Das Getriebe 132 ist mit dem Maschinenrahmen 133 vorzugsweise verschraubt.

In der vorstehenden Beschreibung unter Bezugnahme auf die Zeichnungen wurden immer Ausführungsformen der Erfindung erläutert, bei denen die Antriebswelle in den Planetenträger der ersten Getriebestufe integriert ist. In den Rahmen dieser Erfindung fallen natürlich aber auch Ausführungsformen, bei denen eine gesonderte Antriebswelle vorgesehen ist, die mit dem Planetenträger verbunden, z.B. verschraubt, und über diesen im bzw. am Getriebe gelagert ist. Auch dabei ergeben sich die eingangs erwähnten Vorteile, daß die Kosten und das Gewicht der Anlage wesentlich verringert werden können, da auf eine eigene Lagerung der Antriebswelle verzichtet werden kann.

## Patentansprüche

1. Planetengetriebe für eine Windkraftanlage mit einem in einem Getriebegehäuse des Planetengetriebes gelagerten. Planetenträger, der mit einer querkraftbelasteten Antriebswelle verbunden ist wobei an der Antriebswelle ein Rotor (27, 30, 41, 126, 130) befestigt ist **dadurch gekennzeichnet, daß** die Antriebswelle ohne gesonderte Lagerung über den Planetenträger (20 ; 120) im Getriebegehäuse gelagert ist, wobei alle die Antriebswelle belastenden Querkräfte über die Lager (21, 44, 121, 122) des Planetenträgers (20, 120) in das Getriebegehäuse (25 ; 124 ; 125;) eingeleitet werden.

2. Getriebe nach Anspruch 1, **dadurch gekennzeichnet, daß** die Antriebswelle mit dem Planetenträger (20, 120) einstückig ausgebildet ist.

3. Getriebe nach Anspruch 1, **dadurch gekennzeichnet, daß** die Antriebswelle am Planetenträger (20,120) befestigt, vorzugsweise angeschraubt ist.

4. Getriebe nach Anspruch 1, **dadurch gekennzeichnet, daß** am Rotor (27, 30, 41, 126, 130) Rotorblätter (31, 131) befestigt sind.

5. Getriebe nach einem der Ansprüche, 1 bis 4, **dadurch gekennzeichnet, daß** der Planetenträger (20, 120) den Innenring des antriebsseitigen Lagers (23) des Planetenträgers (20) bildet.

6. Getriebe nach einem der Ansprüche 1 bis 5, **dadurch gekennzeichnet, daß** das Planetengetriebe ein zweistufiges (18, 19) Planetengetriebe ist.

7. Getriebe nach Anspruch 6, **dadurch gekennzeichnet, daß** das Sonnenrad (46) der ersten, antriebsseitigen Getriebestufe (18) mit dem Planetenträger (48) der zweiten Getriebestufe (19) verbunden ist.

## Claims

1. Planetary gear for a wind power station, having a planet carrier which is mounted in a gear casing of the planetary gear and is connected to a transversely stressed drive shaft, a rotor (27, 30, 41, 126, 130) being mounted on the drive shaft, **characterised in that** the drive shaft is mounted in the gear casing without separate mounting via the planet carrier (20; 120), all the transverse stresses acting upon the drive shaft being directed into the gear casing (25; 124, 125) via the bearings (21, 44, 121, 122) of the planet carrier (20; 120).

2. Gear according to claim 1, **characterised in that** the drive shaft is configured integrally with the planet carrier (20; 120).

3. Gear according to claim 1, **characterised in that** the drive shaft is mounted, preferably screwed-on, on the planet carrier (20, 120).

4. Gear according to claim 1, **characterised in that** rotor blades (31, 131) are mounted on the rotor (27, 30, 41, 126, 130).

5. Gear according to one of the claims 1 to 4, **characterised in that** the planet carrier (20, 120) forms the inner raceway of the drive-side bearing (23) of the planet carrier (20).

6. Gear according to one of the claims 1 to 5, **characterised in that** the planetary gear is a two-stage (18, 19) planetary gear.

7. Gear according to claim 6, **characterised in that** the sun wheel (46) of the first, drive-side gear stage (18) is connected to the planet carrier (48) of the second gear stage (19).

## Revendications

1. Engrenage planétaire pour turbine éolienne, comprenant un porte-satellites monté dans un carter d'engrenage qui est lié à un arbre d'entraînement soumis à des efforts transversaux, un rotor (27, 30, 41, 126, 130) étant fixé à l'arbre d'entraînement, **caractérisé en ce que** l'arbre d'entraînement est supporté sans montage en palier séparé dans le carter d'engrenage par l'intermédiaire du porte-satellites (20, 120), tous les efforts transversaux qui sollicitent l'arbre d'entraînement étant transmis au carter d'engrenage à travers les paliers (21, 44, 121, 122) du porte-satellites (20, 120).

2. Engrenage planétaire selon la revendication 1, **caractérisé en ce que** l'arbre d'entraînement (20, 120) est réalisé d'une pièce avec le porte-satellites.

3. Engrenage planétaire selon la revendication 1, **caractérisé en ce que** l'arbre d'entraînement (20, 120) est fixé au porte-satellites, de préférence est vissé à celui-ci.

4. Engrenage planétaire selon la revendication 1, **caractérisé en ce que** des pales de rotor (31, 131) sont fixées au rotor (27, 30, 41, 126, 130).

5. Engrenage planétaire selon une des revendications 1 à 4, **caractérisé en ce que** le porte-satellites (20, 120) forme la bague de palier intérieure du palier (23), côté entraînement, du porte-satellites (20).

6. Engrenage planétaire selon une des revendications 1 à 5, **caractérisé en ce que** l'engrenage planétaire est un engrenage planétaire à deux étages.

7. Engrenage planétaire selon la revendication 6, **caractérisé en ce que** la roue solaire (46) du premier étage (18) d'engrenage, côté entraînement, est liée au porte-satellites (48) du second étage (19) d'engrenage.
